(19) Europäisches Patentamt
European Patent Office
Office européen des brevets

(11) EP 1 916 169 A2

(12) EUROPÄISCHE PATENTANMELDUNG

(43) Veröffentlichungstag:
30.04.2008 Patentblatt 2008/18

(51) Int Cl.:
*B60T 11/10* (2006.01)     *B60T 15/02* (2006.01)
*B60T 8/18* (2006.01)

(21) Anmeldenummer: 07017256.4

(22) Anmeldetag: 04.09.2007

(84) Benannte Vertragsstaaten:
AT BE BG CH CY CZ DE DK EE ES FI FR GB GR
HU IE IS IT LI LT LU LV MC MT NL PL PT RO SE
SI SK TR
Benannte Erstreckungsstaaten:
AL BA HR MK RS

(30) Priorität: 26.10.2006 DE 102006050613

(71) Anmelder: Robert Bosch GmbH
70184 Stuttgart (DE)

(72) Erfinder: Rusbült, René
71701 Schwieberdingen (DE)

(74) Vertreter: Thürer, Andreas
Bosch Rexroth AG
Zum Eisengiesser 1
97816 Lohr am Main (DE)

(54) **Anhängerbremsventil mit Lastanpassung**

(57) Offenbart ist ein hydraulisches Anhängerbremsventil (1) zum Beaufschlagen einer Anhängerbremse mit
einem Bremsdruck, mit einem Ventilgehäuse (12) in dessen Ventilbohrung (42) eine Bremsschieberanordnung
(2) zur Steuerung des Anhängerbremsdruckes verschiebbar geführt ist, die in einer Richtung in Abhängigkeit von einem Pilotdruck ($p_x$) von einer Übersetzerkolbenanordnung (10) beaufschlagt ist, wobei die Übersetzerkolbenanordnung (10) zumindest zwei Steuerflächen
hat, die mit dem Pilotdruck ($p_x$) beaufschlagbar und zum
Anpassen des Bremsdruckes wahlweise gemeinsam
oder einzeln wirksam sind.

FIG.1

EP 1 916 169 A2

**Beschreibung**

Die Erfindung betrifft ein Anhängerbremsventil gemäß dem Oberbegriff des Patentanspruchs 1.

Das erfindungsgemäße Anhängerbremsventil kann prinzipiell bei einer Vielzahl hydraulischer Fremdkraftbremsen, beispielsweise für eine Hilfskraft-bremse eines Zugfahrzeuges, einer selbstfahrenden Arbeitsmaschine oder eines Sonderfahrzeuges eingesetzt werden. Das Hauptanwendungsgebiet des Anhängerbrems-ventils dürfte jedoch bei hydraulischen Bremssystemen für die Abbremsung von schweren Anhängern an landwirtschaftlichen Zugfahrzeugen, beispielsweise Ackerschleppern liegen.

Beispiele derartiger Anhängerbremsventile sind in dem Datenblatt 1987760506 mit dem Titel "Hydraulische Anhängerbremsventile" der Firma Bosch Rexroth beschrieben. Bei diesen herkömmlichen Anhängerbremsventilen wird der Druck des Bremskreises des Zugfahrzeuges (Zugfahrzeugbremsdruck) als Pilotdruck $p_x$ zur Ansteuerung des Anhängerbremsventils verwendet. Der Pilotdruck $p_x$ wirkt auf einen im Wesentlichen zylinderförmigen Übersetzerkolben (Pilotkolben), der über eine Steuerfederanordnung an einer Stirnseite eines Steuerschiebers des Anhängerbremsventils abgestützt ist. Die andere Stirnseite des Steuerschiebers ist mit dem Anhängerbremsdruck $p_b$ beaufschlagt. Der Steuerschieber ist in seiner Grundstellung zwischen einer Rückstellfeder und der Steuerfederanordnung eingespannt. In dieser federvorgespannten Grundposition des Steuerschiebers ist ein Bremsanschluss des Anhängerbremsventils über einen Rücklaufanschluss mit einem Tank verbunden, so dass die Anhängerbremse drucklos ist. Bei Betätigung der Bremse des Zugfahrzeuges, beispielsweise über ein Bremspedal, wird der dem Druck des Bremskreises des Zugfahrzeuges entsprechende Pilotdruck $p_x$ erhöht, so dass der Steuerschieber über den Pilotkolben gegen die Kraft der Rückstellfeder verschoben wird, um den Bremsanschluss des Anhängerbremssystems und ein dem Bremssystem zugeordnetes Stromregelventil vom Tank zu trennen und Bremsdruck im Anhängerbremssystem aufzubauen. Zur Anpassung der beiden Bremsanlagen werden die Bremsdrücke der Zugfahrzeugbremse und der Anhängerbremse über den Durchmesser $d_x$ des Übersetzerkolbens aufeinander abgestimmt, wobei für das Übersetzungsverhältnis $i_d$ der beiden Bremsdrücke $p_b$, $p_x$ und entsprechend für den Steuerschieber- und Übersetzerkolbendurchmesser $d_b$, $d_x$ folgende Beziehung gilt:

$$\frac{p_x}{p_b} = \frac{d_b^{\,2}}{d_x^{\,2}} = i_d$$

.

Das heißt, das Druckniveau im Anhänger relativ zum Zugfahrzeug kann bisher nur durch ein festes Übersetzungsverhältnis $i_d$ eingestellt werden. Diese Abstimmung des Anhängerbremsventils, d.h. die Auswahl des Durchmessers des Übersetzerkolbens wird in der Regel vom Zugfahrzeughersteller vorgenommen. Die Auslegung erfolgt hierbei meist auf den vollbeladenen Anhänger. Nachteilig bei derartigen Anhängerbremsventilen ist, dass diese vom Benutzer nicht an die Anhängergröße und den Beladungszustand des Anhängers anpassbar sind, so dass die Bremswirkung des Anhängerbremssystems im Teillastbereich oder bei unbeladenem Anhänger zu groß ist und es zu blockierenden Rädern des Anhängers, langen Bremswegen und einer verringerten Fahrstabilität des Anhängers bei hohem Reifenverschleiß kommen kann.

Demgegenüber liegt der Erfindung die Aufgabe zugrunde, ein hydraulisches Anhängerbremsventil zu schaffen, das eine verbesserte Ansteuerung eines Anhängerbremssystems ermöglicht.

Diese Aufgabe wird durch ein Anhängerbremsventil mit den Merkmalen des Patentanspruchs 1 gelöst.

Das erfindungsgemäße Anhängerbremsventil zum Beaufschlagen einer Anhängerbremse mit einem Bremsdruck hat ein Ventilgehäuse in dessen Ventilbohrung eine Bremsschieberanordnung zur Steuerung des Anhängerbremsdruckes verschiebbar geführt ist, die in einer Richtung in Abhängigkeit von einem Pilotdruck von einer Übersetzerkolbenanordnung beaufschlagt ist. Erfindungsgemäß hat die Übersetzerkolbenanordnung zumindest zwei Steuerflächen, die mit dem Pilotdruck beaufschlagbar und zum Anpassen des Bremsdruckes wahlweise gemeinsam oder einzeln wirksam sind. Dadurch ist das Übersetzungsverhältnis gegenüber dem Stand der Technik im Betrieb an die Anhängergröße und den Beladungszustand des Anhängers anpassbar, so dass die Bremswirkung des Anhängerbremssystems bei vollbeladenem Anhänger aber auch im Teillastbereich oder bei unbeladenem Anhänger optimal einstellbar ist. Durch die Anpassung der Ventilkennlinie an den Beladungszustand und die Anhängergröße erhöht sich die Verkehrssicherheit des Gespanns wesentlich. Insbesondere wird ein Blockieren der Räder des Anhängers vermieden, so dass ein verkürzter Bremsweg bei verringertem Reifenverschleiß und verbesserter Fahrzeugstabilität beim Bremsen erreicht wird.

Die Übersetzerkolbenanordnung ist vorzugsweise über zumindest eine Sperrvorrichtung fixierbar, so dass beide Steuerflächen gemeinsam oder bei betätigter Sperrvorrichtung lediglich eine der Steuerflächen gegen die Bremsschieberanordnung wirksam sind.

Gemäß einem besonders bevorzugten Ausführungsbeispiel der Erfindung hat die Übersetzerkolbenanordnung zumindest einen Kolbenring und einen in diesem verschiebbar geführten Zylinderkolben, wobei der Kolbenring über die Sperrvorrichtung fixierbar ist, so dass der Kolbenring gemeinsam mit dem Zylinderkolben oder bei betätigter Sperrvorrichtung lediglich der Zylinderkolben gegen die Bremsschieberanordnung wirkt.

Das heißt, die einzelnen Bestandteile lassen sich blokkieren, so dass nur die freigegebenen Teile der Übersetzerkolbenanordnung an der Kraftübertragung teilhaben, so dass eine stufig einstellbare Lastanpassung erreicht wird. Die Umschaltung zwischen den einzelnen Übersetzungen erfolgt über die Sperrvorrichtung, die auf unterschiedlichste Weise aktiviert werden kann.

Beispielsweise verwendet die Sperrvorrichtung bei einem bevorzugten Ausführungsbeispiel einen Zylinderstift, der abschnittsweise mit einer Außenumfangsnut des Kolbenringes in Eingriff bringbar ist. Die Sperrvorrichtung kann erfindungsgemäß mechanisch, elektrisch, pneumatisch und/oder hydraulisch betätigbar sein.

Als besonders vorteilhaft hat es sich erwiesen, wenn der Zylinderkolben einen Radialbund aufweist, dessen Ringschulter einen Anschlag für den Kolbenring ausbildet. Dadurch wird der Zylinderkolben von dem Kolbenring mitgenommen, wobei die Kraftübertragung auf die Bremsschieberanordnung vorzugsweise über eine Stirnfläche des Radialbunds erfolgt.

Die Übersetzerkolbenanordnung erstreckt sich gemäß einem Ausführungsbeispiel der Erfindung entlang einer Ventillängsachse. Vorzugsweise ist die Übersetzerkolbenanordnung in einem an dem Ventilgehäuse festgelegten Gehäuse oder einem Ansteuerkopf angeordnet.

Bei einem bevorzugten Ausführungsbeispiel hat die Bremsschieberanordnung einen Steuerschieber, der über die Übersetzerkolbenanordnung in Schließrichtung vom Pilotdruck beaufschlagt ist. Zur Druckübersetzung wirkt der Pilotdruck insbesondere auf eine Stirnfläche der Übersetzerkolbenanordnung mit größerem Querschnitt als die Stirnfläche des Steuerschiebers der Bremsschieberanordnung.

Gemäß einer Variante der Erfindung ist zwischen der Bremsschieberanordnung und der Übersetzerkolbenanordnung eine Steuerfederanordnung zur Begrenzung des Anhängerbremsdruckes angeordnet.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:

    Figur 1 einen Längsschnitt eines erfindungsgemäßen Anhängerbremsventils gemäß einem ersten Ausführungsbeispiel und
    Figur 2 eine Detaildarstellung eines Anhängerbremsventils im Bereich der Übersetzerkolbenanordnung gemäß einem weiteren Ausführungsbeispiel.

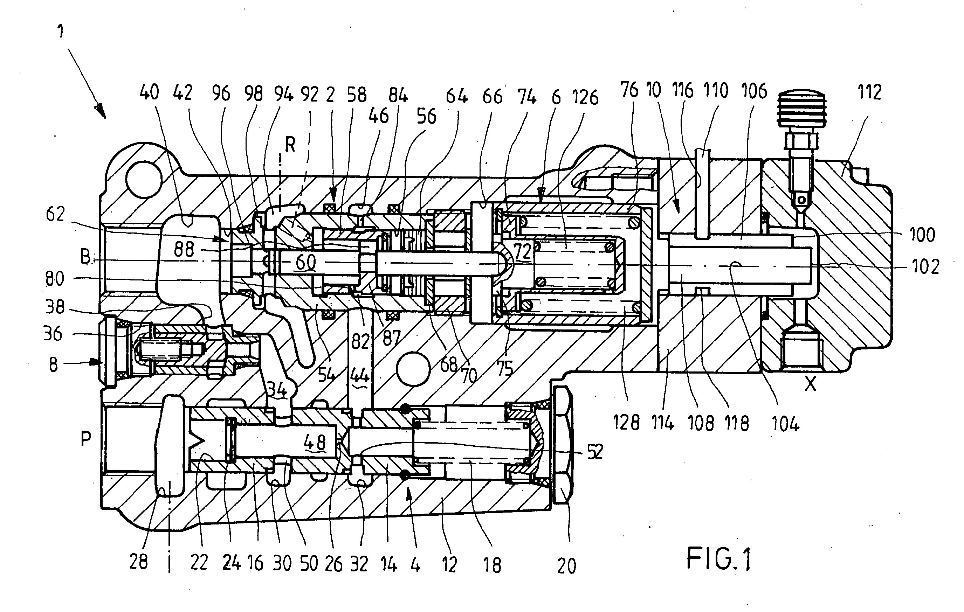

Figur 1 zeigt einen Längsschnitt eines Anhängerbremsventils 1 zur Druckmittelversorgung eines Bremsanschlusses B und eines Verbraucheranschlusses N. Das Anhängerbremsventil 1 besteht im Wesentlichen aus einer Bremsschieberanordnung 2, einem Stromregelventil 4 zur Steuerung des Druckmittelvolumenstromes zu dem Bremsanschluss B der Anhängerbremse, einer Steuerfederanordnung 6 über die der maximale Anhängerbremsdruck begrenzt ist und einem zwischen dem Stromregelventil 4 und dem Bremsanschluss B angeordnetem Rückschlagventil 8, das eine Rückströmung von dem Bremsanschluss B zu dem Stromregelventil 4 verhindert. Die Druckmittelversorgung des Anhängerbremsventils 1 erfolgt über einen Pumpenanschluss P, der mit einer nicht dargestellten Pumpe der Zugfahrzeughydraulik verbunden ist. Die Bremsschieberanordnung 2 ist zur Steuerung des Anhängerbremsdruckes über einen Steueranschluss X in einer Richtung in Abhängigkeit von dem Zugfahrzeugbremsdruck (Pilotdruck $p_x$) von einer Übersetzerkolbenanordnung 10 beaufschlagt, wobei über das Stromregelventil 4 der Pumpenanschluss P mit dem Bremsanschluss B der Anhängerbremse verbunden ist und über die Bremsschieberanordnung 2 ein mit einer Druckmittelsenke verbundener Rücklaufanschluss R mit dem Bremsanschluss B verbindbar ist, so dass die Bremsschieberanordnung 2 in Abhängigkeit von dem am Steueranschluss X anliegenden Pilotdruck $p_x$ über die Übersetzerkolbenanordnung 10 ansteuerbar ist.

Das Anhängerbremsventil 1 hat ein Ventilgehäuse 12 mit einer Längsbohrung 14, in der ein Ventilschieber 16 des Stromregelventils 4 verschiebbar geführt ist, auf den entgegen der Druckmittelströmungsrichtung eine Regelfeder 18 wirkt, die sich an einer in das Ventilgehäuse 12 eingeschraubten Verschlussschraube 20 abstützt. Der Ventilschieber 16 ist von einer Axialbohrung 22 durchsetzt, in der eine Blende 24 angeordnet ist. Stromabwärts der Blende 24 ist die Axialbohrung 22 zu einer Drossel 26 verjüngt, die einen gegenüber der Blende 24 wesentlich kleineren Innendurchmesser aufweist. An der Längsbohrung 14 sind Ringnuten 28, 30, 32 ausgebildet, wobei die Ringnut 28 mit dem Verbraucheranschluss N verbunden ist. In die Ringnut 30 mündet ein Druckmittelkanal 34 in den sich eine Gehäusebohrung 36 erstreckt, in der das in Richtung des Stromregelventils 4 sperrende Rückschlagventil 8 angeordnet ist. Von der Gehäusebohrung 36 geht ein Druckmittelkanal 38 aus, der in einen Ringraum 40 einer parallel zu der Längsbohrung 14 verlaufenden Ventilbohrung 42 mündet. Von der Ringnut 32 geht ein Verbindungskanal 44 aus, der in eine Ringnut 46 der Ventilbohrung 42 einmündet. In den zwischen der Blende 24 und der Drosselbohrung 26 angeordneten Raum 48 des Ventilschiebers 16 münden auf Höhe der Ringnut 30 eine Vielzahl von Radialbohrungen 50 ein. Stromabwärts der Drosselbohrung 26 münden in die Axialbohrung 22 des Ventilschiebers 16 Mehrere auf Höhe der Ringnut 32 liegende Mantelbohrungen 52 ein. In die Ventilbohrung 42 ist ein Gehäuseeinsatz 54 eingesetzt, in dessen Gehäusebohrung 56 die Bremsschieberanordnung 2 verschiebbar gelagert ist. Die Bremsschieberanordnung 2 besteht im Wesentlichen aus einem Steuerkolben 58 in dem ein Steuerschieber 60 befestigt ist, dessen linker Endabschnitt in einem Steuerabschnitt 62 der Gehäusebohrung 56 geführt ist, während sein rechter Abschnitt durch eine Dichtmanschette 64 in einen radial erweiterten Endabschnitt 66 der Ventilbohrung 42 geführt ist. Die Dichtmanschette 64 ist über eine Scheibe 68 an einem in die Ventilbohrung 42 eingeschraubten Einsatz 70 abgestützt. Der Steuerschieber 60 ist über einen Federteller 72 an der Steuerfederanordnung 6 abgestützt, der über einen Übergangskolben 74 in einem etwa becherförmigen Schieber 76 gelagert ist. Die Ringwand des Steuerkolbens 58 der Bremsschieberanordnung 2 ist von einer Radialbohrung 80 durchsetzt, die über eine Ringnut 82 und eine Mantelbohrung 84 des Gehäuseeinsatzes 54 in der dargestellten Arbeitsposition der Bremsschieberanordnung 2 mit dem Verbindungskanal 44 verbunden ist. An der Stirnwand des Steuerkolbens 58 greift eine Rückstellfeder 87 an, die den Steuerkolben 58 über den Steuerschieber 60 gegen die Steuerfederanordnung 6 vorspannt. Die Stirnwand ist durch eine Druckausgleichsbohrung 88 unterbrochen. Von einem Raum zwischen dem Steuerkolben 58 und dem Gehäuseeinsatz 54 verläuft eine Schrägbohrung 92 in einen mit dem Rücklaufanschluss R verbundenen Entlastungsraum 94 der Gehäusebohrung 56. In dem Steuerabschnitt 62 der Gehäusebohrung 56 des Gehäuseeinsatzes 54 ist eine Längsbohrung 96 ausgebildet, von der Radialbohrungen 98 nach außen verlaufen, die in den Entlastungsraum 94 münden.

Die Bremsschieberanordnung 2 ist zur Steuerung des Anhängerbremsdruckes in einer Richtung in Abhängigkeit von dem Pilotdruck $p_x$ von der Übersetzerkolbenanordnung 10 beaufschlagt. Die Übersetzerkolbenanordnung hat zwei Steuerflächen 100, 102 die mit dem Pilotdruck $p_x$ beaufschlagbar und zum Anpassen des Bremsdruckes $p_b$ wahlweise gemeinsam oder einzeln wirksam sind. Dadurch ist es möglich, das Übersetzungsverhältnis im Betrieb an unterschiedliche Beladezustände des Anhängers und die Anhängergröße anzupassen, um eine optimale Bremswirkung zu erzielen.

Die Übersetzerkolbenanordnung 10 erstreckt sich gemäß dem dargestellten Ausführungsbeispiel der Erfindung entlang einer Ventillängsachse 104 und besteht im Wesentlichen aus einem Kolbenring 106 und einem in diesem verschiebbar geführten Zylinderkolben 108. Der Kolbenring 106 ist über eine Sperrvorrichtung 110 in einem zwischen dem Ventilgehäuse 12 und einem Ansteuerkopf 112 angeordnetem Gehäuse 114 fixierbar, so dass der Kolbenring 106 gemeinsam mit dem Zylinderkolben 108 (Kraft auf Bremsschieberanordnung 2 entspricht dem Pilotdruck $p_x$ mal Steuerfläche 100 addiert mit Steuerfläche 102) oder bei gemäß Figur 1 betätigter Sperrvorrichtung 110 lediglich der Zylinderkolben 108 gegen die Bremsschieberanordnung 2 wirkt (Kraft auf Bremsschieberanordnung 2 entspricht dem Pilotdruck $p_x$ mal Steuerfläche 102), so dass eine stufig einstellbare Lastanpassung der Anhängerbremse erreicht wird.

Bei einem nicht dargestellten Ausführungsbeispiel der Erfindung ist die Übersetzerkolbenanordnung 10 in dem Ansteuerkopf 112 angeordnet. Die Umschaltung zwischen den einzelnen Übersetzungen erfolgt über die Sperrvorrichtung 110, die auf unterschiedlichste Weise aktiviert werden kann. Bei dem dargestellten Ausführungsbeispiel findet als Sperrvorrichtung 110 ein verschiebbar in einer Radialbohrung 116 des Gehäuses 114 angeordneter Zylinderstift Verwendung, der abschnittsweise mit einer Außenumfangsnut 118 des Kolbenringes 106 in Eingriff bringbar ist. Die Sperrvorrichtung 110 kann mechanisch, elektrisch, pneumatisch und/oder hydraulisch betätigbar sein.

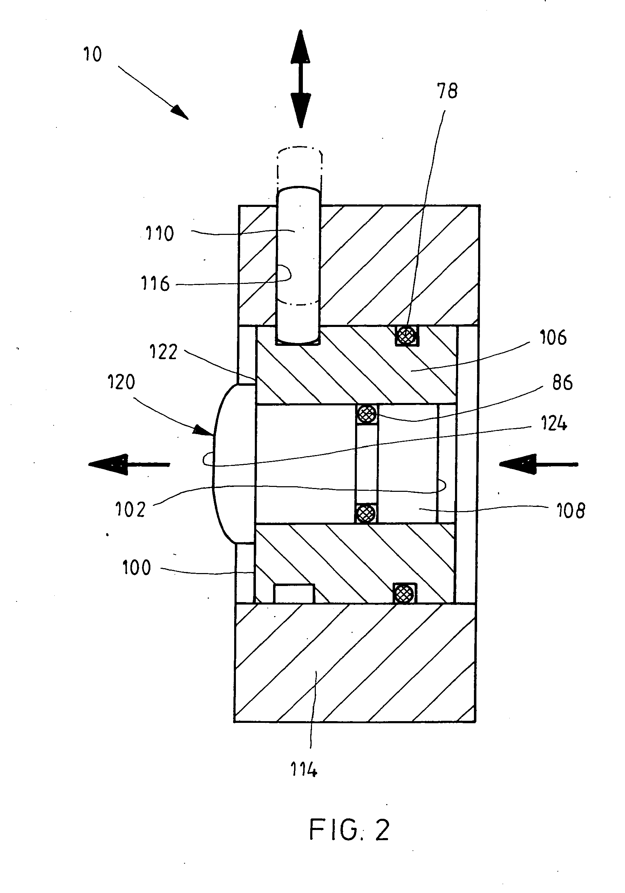

Wie insbesondere Figur 2 entnehmbar ist, die eine Detaildarstellung eines Anhängerbremsventils im Bereich der Übersetzerkolbenanordnung 10 gemäß einem weiteren Ausführungsbeispiel zeigt, hat der Zylinderkolben 108 einen Radialbund 120, dessen Ringschulter 122 einen Anschlag für den Kolbenring 106 ausbildet. Dadurch wird der Zylinderkolben 108 bei geöffneter Sperrvorrichtung 110 von dem Kolbenring 106 mitgenommen, wobei die Kraftübertragung auf die Bremsschieberanordnung 2 über eine ballige Stirnfläche 124 des Radialbunds 120 erfolgt. Der Kolbenring 106 ist über eine Dichtung 78 gegenüber dem Gehäuse 114 und der Zylinderkolben 108 über eine Dichtung 86 gegenüber dem Kolbenring 106 abgedichtet. Ist die Sperre 110 gelöst, sind der Kolbenring 106 und der Zylinderkolben 108 axialverschiebbar, so dass beide Steuerflächen 100, 102 zur Kraftübersetzung wirksam sind und eine entsprechend hohe Kraft auf die Bremsschieberanordnung 2 und dadurch eine hohe Bremskraft erreicht wird. Diese Schaltstellung der Sperre 110 ist beispielsweise für eine hohe Anhängerlast geeignet, um eine optimale Bremswirkung zu erzielen.

Wird nun der Kolbenring 106 über die Sperrvorrichtung 110 gesperrt, d.h. axialfest in dem Gehäuse 114 gehalten, ist lediglich die Steuerfläche 102 des Zylinderkolbens 108 wirksam, so dass eine verringerte Kraft auf die Bremsschieberanordnung 2 und dadurch eine verringerte Bremskraft erreicht wird. Diese Schaltstellung ist beispielsweise für kleine, teil- oder unbeladene Anhänger geeignet, um eine optimale Bremswirkung zu erzielen. Hierbei wird die Steuerfederanordnung 6'(siehe Figur 1) durch die Wirkung des Pilotdrucks $p_x$ über die Übersetzerkolbenanordnung 10 gegen die Kraft der Regelfeder 18 verschoben, um das Anhängerbremssystem anzusteuern. Die Steuerfederanordnung 6 hat eine an dem Übergangskolben 74 abgestützte und auf den Federteller 72 wirkende erste Steuerfeder 126, wobei der Übergangskolben 74 nach einem ersten Weg auf eine Radialschulter 75 des Federteller 72 aufläuft und diesen mitnimmt, so dass eine zweite an dem Schieber 76 abgestützte und an dm Übergangskolben 74 angreifende Steuerfeder 128 zusammengedrückt wird und mit der aus dem Pilotdruck $p_x$ resultierenden Kraft auf den Zylinderkolben 108 die auf den Steuerschieber 60 in Bremsdruckaufbaurichtung einwirkende Maximalkraft zur Maximaldruckbegrenzung des Anhängerbremssystems bestimmt. Da die Übersetzerkolbenanordnung 10 zwei Steuerflächen 100, 102 aufweist, die zum Anpassen des Bremsdruckes $p_b$ wahlweise gemeinsam oder einzeln wirksam mit dem Pilotdruck $p_x$ beaufschlagbar sind, ist es wie eingangs erläutert möglich, das Übersetzungsverhältnis im Betrieb an unterschiedliche Beladezustände des Anhängers und Anhängergrößen anzupassen, um eine optimale Bremswirkung zu erzielen. Hierzu ist der Kolbenring 106 über die Sperrvorrichtung 110 fixierbar, so dass dieser gemeinsam mit dem Zylinderkolben 108 oder bei betätigter Sperrvorrichtung 110 gemäß der Figuren, lediglich der Zylinderkolben 108 gegen die Bremsschieberanordnung 2 wirkt. Dadurch ist es möglich, über die Sperrvorrichtung 110 den Bremsdruck $p_b$ des Anhängerbremssystems an unterschiedliche Anhängergrößen und Beladezustände des Anhängers anzupassen, um eine optimale Bremswirkung zu erzielen. Bei einer Maximalbremsung der Anhängerbremse wird der maximal zulässige Anhängerbremsdruck pb erreicht. Ein weiteres Ansteigen des Anhängerbremsdruckes wird durch die Steuerfederanordnung 6 verhindert, auch wenn der Zugfahrzeugbremsdruck weiter ansteigt. Hierzu werden die auf den maximal zulässigen Anhängerbremsdruck vorgespannten Steuerfedern 126, 128 eingedrückt, wobei der Steuerschieber 60 kurzzeitig die Verbindung von dem Bremsanschluss B zu dem Rücklaufanschluss R aufsteuert und dadurch ein weiteres Ansteigen des Bremsdruckes $p_b$ verhindert.

Das erfindungsgemäße Anhängerbremsventil 1 ist nicht auf die beschriebene zweistufige Übersetzerkolbenanordnung 10 beschränkt, vielmehr kann die Übersetzerkolbenanordnung 10 eine Vielzahl von Kolbenteilen aufweisen, so dass weitere Übersetzungsverhältnisse realisierbar sind. Des Weiteren ist die Erfindung nicht auf die dargestellte Ausbildung und Anordnung der Übersetzerkolben beschränkt, beispielsweise können die Übersetzerkolben auch nebeneinander angeordnet sein.

Offenbart ist ein hydraulisches Anhängerbremsventil 1 zum Beaufschlagen einer Anhängerbremse mit einem Bremsdruck, mit einem Ventilgehäuse 12 in dessen Ventilbohrung 42 eine Bremsschieberanordnung 2 zur Steuerung des Anhängerbremsdruckes $p_b$ verschiebbar geführt ist, die in einer Richtung in Abhängigkeit von einem Pilotdruck $p_x$ von einer Übersetzerkolbenanordnung 10 beaufschlagt ist, wobei die Übersetzerkolbenanordnung 10 zumindest zwei Steuerflächen 100, 102 hat, die mit dem Pilotdruck ($p_x$) beaufschlagbar und zum Anpassen des Bremsdruckes ($p_b$) wahlweise gemeinsam oder einzeln wirksam sind.

**Patentansprüche**

1. Hydraulisches Anhängerbremsventil zum Beaufschlagen einer Anhängerbremse mit einem Bremsdruck, mit einem Ventilgehäuse (12) in dessen Ventilbohrung (42) eine Bremsschieberanordnung (2) zur Steuerung des Anhängerbremsdruckes ($p_b$) verschiebbar geführt ist, die in einer Richtung in Abhängigkeit von einem Pilotdruck ($p_x$) von einer Übersetzerkolbenanordnung (10) beaufschlagt ist, **dadurch gekennzeichnet, dass** die Übersetzerkolbenanordnung (10) zumindest zwei Steuerflächen (100, 102) hat, die mit dem Pilotdruck ($p_x$) beaufschlagbar und zum Anpassen des Bremsdruckes ($p_b$) wahlweise gemeinsam oder einzeln wirksam sind.

2. Anhängerbremsventil nach Patentanspruch 1, wobei die Übersetzerkolbenanordnung (10) über zumindest eine Sperrvorrichtung (110) fixierbar ist, so dass beide Steuerflächen (100, 102) gemeinsam wirksam sind oder bei betätigter Sperrvorrichtung (110) lediglich eine der Steuerflächen (100, 102) gegen die Bremsschieberanordnung (2) wirkt.

3. Anhängerbremsventil nach Patentanspruch 2, wobei die Übersetzerkolbenanordnung (10) zumindest einen Kolbenring (106) und einen in diesem verschiebbar geführten Zylinderkolben (108) aufweist, wobei der Kolbenring (106) über die Sperrvorrichtung (110) fixierbar ist, so dass der Kolbenring (106) gemeinsam mit dem Zylinderkolben (106) oder bei betätigter Sperrvorrichtung (110) lediglich der Zylinderkolben (108) gegen die Bremsschieberanordnung (2) wirkt.

4. Anhängerbremsventil nach Patentanspruch 3, wobei der Zylinderkolben (108) einen Radialbund (120) hat, dessen Ringschulter (122) einen Anschlag für den Kolbenring (106) bildet.

5. Anhängerbremsventil nach Patentanspruch 3 oder 4, wobei die Sperrvorrichtung (110) ein Zylinderstift ist, der abschnittsweise mit einer Außenumfangsnut (118) des Kolbenringes (106) in Eingriff bringbar ist.

6. Anhängerbremsventil nach einem der Patentansprüche 2 bis 4, wobei die Sperrvorrichtung (110) mechanisch, elektrisch, pneumatisch und/oder hydraulisch betätigbar ist.

7. Anhängerbremsventil nach einem der vorhergehenden Patentansprüche, wobei sich die Übersetzerkolbenanordnung (10) im Wesentlichen entlang einer Ventillängsachse (104) erstreckt.

8. Anhängerbremsventil nach einem der vorhergehenden Patentansprüche, wobei die Übersetzerkolbenanordnung (10) zumindest abschnittsweise in einem an dem Ventilgehäuse (12) festgelegten Gehäuse (114) oder einem Ansteuerkopf (112) angeordnet ist.

9. Anhängerbremsventil nach einem der vorhergehenden Patentansprüche, wobei die Bremsschieberanordnung (2) einen Steuerschieber (60) aufweist, der über die Übersetzerkolbenanordnung (10) in

Schließrichtung vom Pilotdruck ($p_x$) beaufschlagt ist.

**10.** Anhängerbremsventil nach einem der vorhergehenden Patentansprüche, wobei zwischen der Bremsschieberanordnung (2) und der Übersetzerkolbenanordnung (10) eine Steuerfederanordnung (6) vorgesehen ist.

EP 1 916 169 A2

FIG.1

7

FIG. 2